# EUROPÄISCHE PATENTSCHRIFT

(11) **EP 0 425 731 B1**
(45) Veröffentlichungstag und Bekanntmachung des Hinweises auf die Patenterteilung: **19.01.1994**
(21) Anmeldenummer: 89120388.7
(22) Anmeldetag: 03.11.1989
(51) Int. Cl.: H04J 3/16, H04L 12/46

(54) **Controller-Bussystem für einen programmierbaren, flexiblen Digitalsignal-Multiplexer**
Controller-bus system for a programmable, flexible digital signal multiplexer
Dispositif de commande d'un système à bus pour un multiplexeur programmable et flexible de signaux numériques

(43) Veröffentlichungstag der Anmeldung: 08.05.1991
(73) Patentinhaber: SIEMENS AKTIENGESELLSCHAFT, 80333 München (DE); SIEMENS-ALBIS AKTIENGESELLSCHAFT, 8047 Zürich (CH)
(72) Erfinder: Aepli, Thomas, Ing. HTL, CH-8603 Schwerzenbach (CH); Ehricke, Claus, Dipl.-Ing., D-8000 München 70 (DE); Schiesser, Markus, Dipl. Phil., CH-8704 Herrliberg (CH); Schramm, Heinz, Dipl.-Ing., D-8000 München 71 (DE)

(56) Entgegenhaltungen:
- EP-A- 0 133 577
- EP-A- 0 186 141

## Beschreibung

Die Erfindung bezieht sich auf ein Controller-Bussystem für einen programmierbaren, flexiblen Digitalsignal-Multiplexer mit teilnehmerseitigen Anschlußeinheiten für Bitraten einer unteren Hierarchiestufe, mit leitungsseitigen Anschlußeinheiten für Bitraten einer gegenüber der unteren höheren Hierarchiestufe, mit einer Zentraleinheit und mit einem Daten-Bussystem.

Ein derartiges Multiplexgerät ist aus der Druckschrift "PDMX-Programmierbarer Digitalmultiplexer für die 2-Mbit/s-Netzebene", herausgegeben von der Siemens AG, Bereich Übertragungssysteme, Postfach 70 00 73, Bestell-Nr. A42020-S154-A1-2-29 bekannt. Dieser flexible Multiplexer ermöglicht eine freizügige Bündelung und Verteilung von Zeitabschnitten digitaler Multiplexsignale in einem Zeitmultiplexgerät. Es sind Verbindungen mehrerer teilnehmerseitiger Anschlußeinheiten, Verbindungen zwischen teilnehmerseitigen Anschlußeinheiten mit einer oder mehreren leitungsseitigen Anschlußeinheiten und/oder eine Kanalverteilung (cross-connect) zwischen leitungsseitigen Anschlußeinheiten möglich. Die Kennzeichen werden derart umgesetzt, daß sie die entsprechenden Kanäle wie Sprach- oder Datensignale einnehmen. Unter teilnehmerseitigen Anschlußeinheiten sind Fernsprecheinrichtungen, Dateneinrichtungen sowie Subraten-Multiplexeinrichtungen zu verstehen. Leitungsseitige Anschlußeinheiten dienen dem Senden oder dem Empfang von Multiplexsignalen beispielsweise mit Bitraten von 1,544 Mbit/s oder 2,048 Mbit/s.

Durch einen älteren Vorschlag (EP-A-395 780) wurde dieser flexible Multiplexer für eine große Anzahl von Anschlußeinheiten geeignet gemacht, indem Gruppen von teilnehmerseitigen Anschlußeinheiten und alle leitungsseitigen Anschlußeinheiten jeweils über eine "kommende" und eine "gehende" Sprache/Daten-Multiplexsignalleitung mit einem Sprache/Daten-Koppelfeld und über eine "kommende" und eine "gehende" Kennzeichen-Multiplex signalleitung mit einem Kennzeichen-Koppelfeld verbunden sind.

Aus der Druckschrift "Planungshilfen Text- und Datenverkehr", Stand April 1960, herausgegeben von der Siemens AG, Bereich Fernschreib- und Datenverkehr, Postfach 70 00 72, D-8000 München 70, Bestell-Nr. F200/122.09 PA 4804 Sul, Seiten 46 und 47 sind HDLC-Prozeduren (High Level Data Link Control) als Datenübertragungs-Steuerungsverfahren unter Verwendung von Datenübertragungsblocks bekannt.

Der Erfindung liegt die Aufgabe zugrunde, ein Controller-Bussystem anzugeben, das auch für eine große Anzahl von teilnehmer-und leitungsseitigen Anschlußeinheiten in einem flexiblen Multiplexer geeignet ist.

Diese Aufgabe wird erfindungsgemäß mit den Merkmalen des Anspruchs 1 gelöst. Eine Ausgestaltung dieser Erfindung ist dem Anspruch 2 zu entnehmen.

Anhand von Ausführungsbeispielen wird die Erfindung nachstehend näher erläutert.
- Figur 1: zeigt ein Blockschaltbild eines flexiblen Multiplexers mit dem erfindungsgemäßen Controller-Bussystem,
- Figur 2: zeigt einen Haupt-Baugruppenträger,
- Figur 3: zeigt einen Erweiterungs-Baugruppenträger und
- Figur 4: zeigt eine Zusatzeinrichtung für den Haupt- und den Erweiterungs-Baugruppenträger.

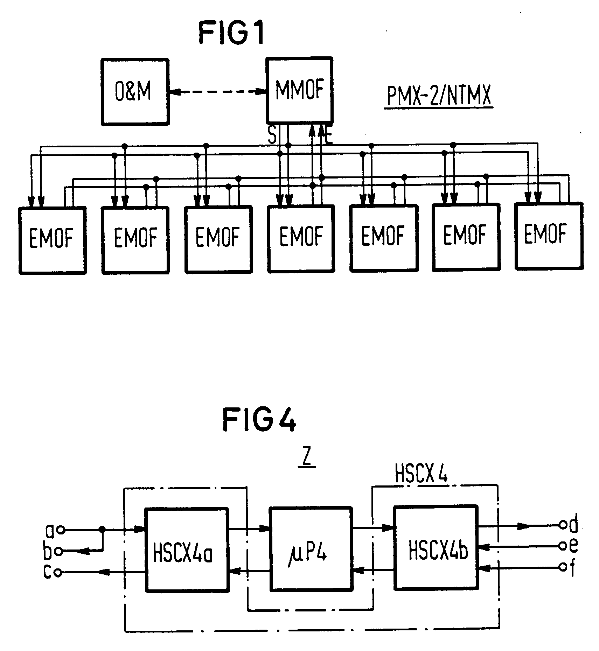

Figur 1 zeigt das Blockschaltbild eines für die Aufnahme des erfindungsgemäßen Controller-Bussystems geeigneten flexiblen Multiplexers PMX oder NTMX (Network Termination Multiplexer) mit einem Haupt-Baugruppenträger MMOF und sieben Erweiterungs-Baugruppenträgern EMOF. Alle Baugruppenträger sind durch eine Sende-Zweidrahtleitung S und eine Empfangs-Zweidrahtleitung E für eine Übertragung interner Daten miteinander verbunden. Das für die Übertragung externer Daten erforderliche Daten-Bussystem ist nicht dargestellt. Weiter ist ein Betriebs- und Überwachungszentrum O&M vorhanden, das zum Haupt-Baugruppenträger MMOF Befehle aussendet, die dieser quittiert.

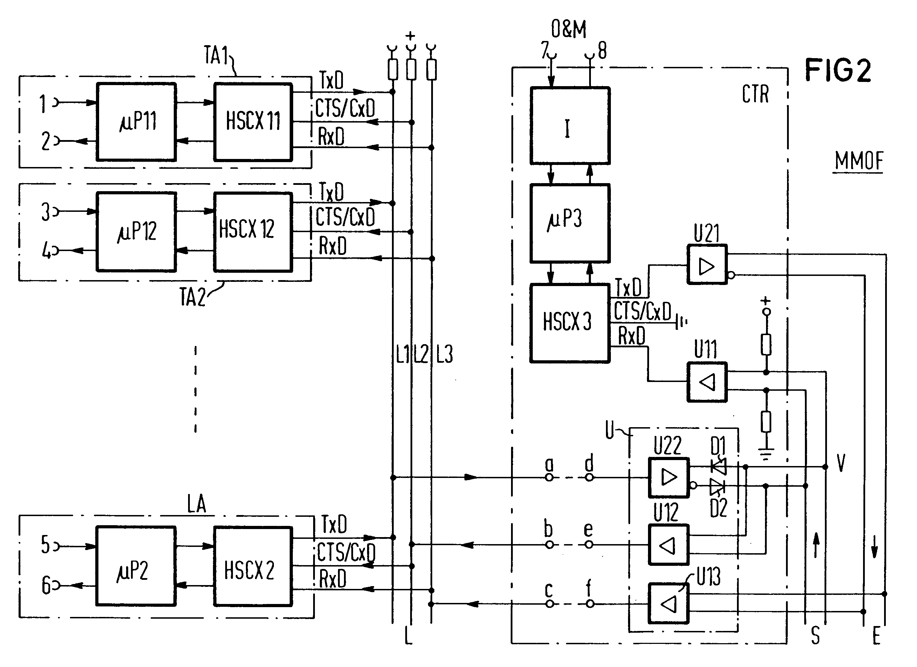

Figur 2 zeigt einen Haupt-Baugruppenträger MMOF mit zwei teilnehmerseitigen Anschlußeinheiten TA1 und TA2, mit einer leitungsseitigen Anschlußeinheit LA, mit einem unsymmetrischen Dreileitersystem L und mit einem Controller CTR, der eine Umsetzereinheit U als Entkopplungsschaltung enthält. In der Regel sind eine Vielzahl weiterer teilnehmerseitiger Anschlußeinheiten oder eine oder mehrere leitungsseitige Anschlußeinheiten angeschlossen. Die zur Verarbeitung der externen Daten erforderlichen Baugruppen und Busse sind nicht gezeigt. Eine Ausnahme bilden Daten von dem und für das Betriebs- und Überwachungszentrum O&M.

Die teilnehmerseitige Anschlußeinheit TA1 enthält einen Mikroprozessor µP11 und einen Kommunikationssteuer-Baustein HSCX11. Die teilnehmerseitige Anschlußeinheit TA2 umfaßt einen Mikroprozessor µP12 und einen Kommunikationssteuer-Baustein HSCX12. Die teilnehmerseitige Anschlußeinheit LA besteht aus einem Mikroprozessor µP2 und einem Kommunikationssteuer-Baustein HSCX2. Der Controller CTR enthält eine Schnittstelle I, einen Mikroprozessor µP3, einen Kommunikationssteuer-Baustein HSCX3, einen Unsymmetrie/Symmetrie-Umsetzer (Treiber) U21, einen Symmetrie/Unsymmetrie-Umsetzer (Empfänger) U11 und eine Umsetzereinheit U. Diese besteht aus einem Unsymmetrie/Symmetrie-Umsetzer (Treiber) U22 mit offener Senke oder Quelle (Open-Drain-Ausgang) und Symmetrie/Unsymmetrie-Umsetzern (Empfängern) U12 und U13 in offener Kollektorschaltung (Open-Collector). Das Vierdrahtsystem V enthält eine Empfangs-Zweidrahtleitung E und eine Sende-Zweidrahtleitung S.

Die Wirkungsweise des Haupt-Baugruppenträgers MMOF wird nachfolgend zusammen mit der des Erweiterungs-Baugruppenträgers EMOF erläutert.

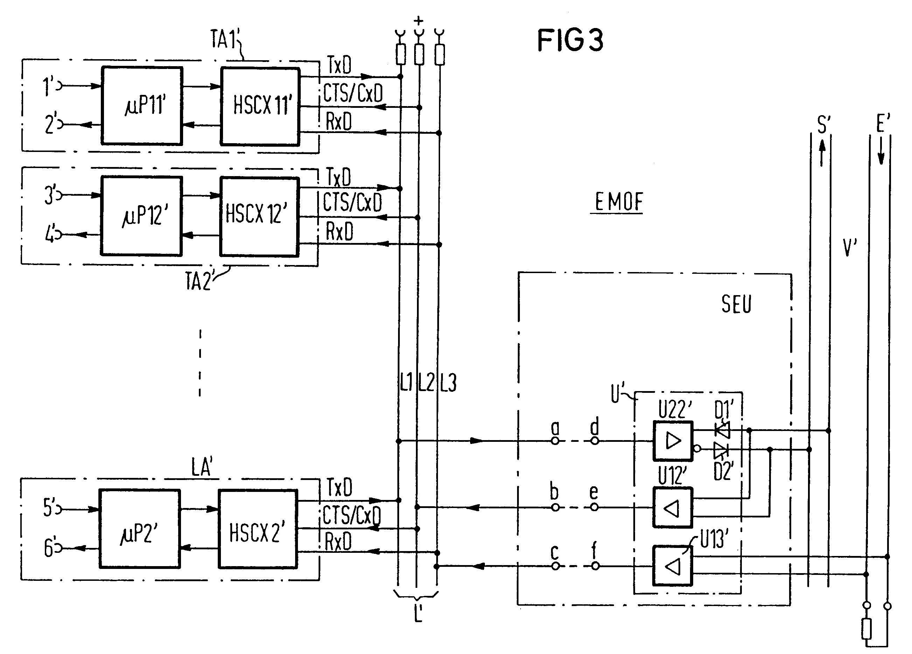

Figur 3 zeigt einen Erweiterungs-Baugruppentärager EMOF. Dieser enthält teilnehmerseitige Anschlußeinheiten TA1′ und TA2′, eine leitungsseitige Anschlußeinheit LA, eine Systemerweiterungs-Baugruppe SEU mit der lediglich gezeigten Umsetzereinheit U′ und ein Vierdrahtsystem V′. Das Apostroph sagt aus, das die damit gekennzeichnete Einheit gleich der mit demselben Bezugszeichens ohne Apostroph ist. Auch hier sind die Einrichtungen zur Verarbeitung der externen Daten nicht dargestellt.

Als Kommunikationssteuer-Bausteine HSCX dienen integrierte Schaltungen SAB 82526. Für Mikroprozessoren µP werden integrierte Schaltungen 80C188 und als Schnittstelle I wird eine integrierte Schaltung 85C30 verwendet. Die Unsymmetrie/Symmetrie-Umsetzer (Treiber) werden mit integrierten Schaltungen SN 75174 und die Symmetrie/Unsymmetrie-Umsetzer (Empfänger) werden mit integrierten Schaltungen SN 75175 realisiert.

Die acht Baugruppenträger MMOF und EMOF enthalten in der Praxis ca. 160 Baugruppen. Der Controller CTR im Haupt-Baugruppenträger MMOF vermag kein Dreileitersystem zu allen diesen Baugruppen zu treiben. Es werden daher bis zu zwanzig Kommunikationssteuer-Bausteine HSCX an jeweils ein Dreileitersystem L angeschlossen und jeweils ein solches in einem Baugruppenträger MMOF und EMOF installiert.

In der teilnehmerseitigen Anschlußeinheit TA1 steht der Mikroprozessor µP11 im Austausch interner Daten mit dem nicht dargestellten Daten-Bussystem. Aufgrund empfangener Befehle gibt er wiederum Befehle an den Kommunikationssteuer-Baustein HSCX11 ab und empfängt von diesem Quittungssignale. Über den Datenausgang TxD gelangen interne Daten an die Sendedatenleitung L1. Von der Empfangsdatenleitung L3 empfängt er wiederum interne Daten an seinem Dateneingang RxD. Weiter empfängt dieser Baustein von der Steuersignalleitung L2 Steuer- und Freigabesignale an seinem Eingang CTS/CxD. Das gleiche läuft bei den teilnehmerseitigen Anschlußeinheiten TA2, TA1′ und TA2′ ab.

Die leitungsseitigen Anschlußeinheiten LA und LA′ unterscheiden sich von den teilnehmerseitigen Anschlußeinheiten TA1, TA2, TA1′ und TA2′ lediglich dadurch, daß ihr Daten-Bussystem Zeitmultiplexsignale einer höheren Hierarchiestufe von außen empfängt oder nach außen abgibt.

Der Mikroprozessor µP3 empfängt über den Eingang 7 der Schnittstelle I Befehle von der Betriebs- und Überwachungszentrale O&M und quittiert diese über den Ausgang 8. Weiter steht er im Datenaustausch mit dem Kommunikationssteuer-Baustein HSCX3. Dieser sendet über seinen Datenausgang TxD Signale an den Unsymmetrie/Symmetrie-Umsetzer 21 aus, der diese über die Empfangs-Zweidrahtleitung E weitergibt. Von der Sende-Zweidrahtleitung S gelangen Signale über den Symmetrie/Unsymmetrie-Umsetzer U11 zum Dateneingang RxD des Kommunikationssteuer-Bausteins HSCX3. Interne Daten der Sendedatenleitung L1 werden über den Unsymmetrie/Symmetrie-Umsetzer U22 und die Entkopplungsdioden D1 und D2 zur Sende-Zweidrahtleitung S und von dieser über den Symmetrie/Unsymmetrie-Umsetzer U12 zur Steuersignalleitung L2 übertragen. Signale von der Empfangs-Zweidrahtleitung E gelangen über den Symmetrie/Unsymmetrie-Umsetzer U13 zur Empfangsdatenleitung L3.

Die symmetrische Anordnung der Sende- und Empfangs-Zweidrahtleitungen S und E bewirkt eine Unempfindlichkeit der Datenübertragung gegenüber Erdpotentialdifferenzen zwischen den einzelnen Baugruppenträgern MMOF und EMOF sowie gegen Beeinflussungsspannungen.

In den sieben Erweiterungs-Baugruppenträgern EMOF erfolgt die Verbindung zwischen dem Vierdrahtsystem V′ und dem Dreileitersystem L′ entsprechend über die Umsetzereinheit U′ in der Systemerweiterungs-Baugruppe SEU.

Der Datenaustausch im Controller-Bussystem erfolgt mittels eines HDLC-Protokolls in Form von Datenübertragungsblöcken mit einem Start-, Adressen-, Informations-, Prüf- und Stoppteil immer dann, wenn gelegentliche Meldungen zur Kanalauswahl, zur Pegeleinstellung, zu einer Betriebsartänderung oder Testsignale zu übertragen sind. Die Kommunikationssteuer-Bausteine HSCX werden im gleichberechtigten Spontanbetrieb (balanced mode) betrieben. Teilnehmerseitige Anschlußeinheiten TA und leitungsseitige Anschlußeinheiten LA sind gleichberechtigt und können zu beliebiger Zeit ein Kommando senden. Ein Dialog kann und soll jedoch nur zwischen dem Controller CTR und den einzelnen Anschlußeinheiten TA und LA geführt werden. Alle internen Daten werden vom Controller CTR erfaßt.

Es kann nun aber vorkommen, daß mehr als ein Kommunikationssteuer-Baustein HSCX gleichzeitig einen Datenübertragungsblock auf die Sendedatenleitung S abgeben. Derjenige Kommunikationssteuer-Baustein HSCX, der zuerst über seinen Symmetrie/Unsymmetrie-Umsetzer U12 bzw. U12′ erfährt, daß sein Datenübertragungsblock auf der Sende-Zweidrahtleitung S verfälscht ist, also eine Kollission mit einem anderen Datenübertragungsblock vorliegt, stellt die Aussendung vorübergehend ein. Die Kollisionserkennung ist eine Eigenschaft des Kommunikationssteuer-Bausteins HSCX, die durch Rückführung des Signals am Datenausgang TxD auf den Steuereingang CTS/CxD erreicht wird.

Da mehrere Kommunikationssteuer-Bausteine HSCX über mehrere Umsetzer U22 oder U22′ an die Sende-Zweidrahtleitung S im Vielfach angeschlossen sind, müssen die Zuführungsleitungen der Gegentaktausgänge über Dioden D1, D2, D1′ und D2′ entkoppelt werden.

Von der Sende-Zweidrahtleitung S gelangt ein Datenübertragungsblock von dem Kommunikationssteuer-Baustein HSCX3 zu allen anderen Kommunikationssteuer-Bausteinen HSCX. Nur derjenige empfängt jedoch den Datenübertragungsblock, der durch seine Adresse angesprochen ist.

Die Trennung der Vierdrahtleitung V und V′ in zwei Übertragungsrichtungen hat den Vorteil, daß Daten vom KommunikationssteuerBaustein HSCX3 im Controller CTR an alle hochohmigen Symmetrie/Unsymmetrie-Umsetzer U13 und U13′ selbst dann noch abgesetzt werden können, wenn die Sende-Zweidrahtleitung S durch einen Defekt der zahlreichen niederohmigen Unsymmetrie/Symmetrie-Umsetzer U22 und U22′ blockiert ist. Kommandos zum Sperren oder Abschalten von Fühler- und Geberschaltungen in den Anschlußeinheiten TA1, TA2, TA1′, TA2′, LA und LA′ können somit noch durchgreifen.

Figur 4 zeigt die Zusatzeinrichtung Z, deren Eingänge a, b und c und deren Ausgänge d, e und f zwischen die mit gleichen Buchstaben bezeichneten Klemmen in den Figuren 2 und/oder 3 eingesetzt werden können. Sie enthält einen Zweifach-Kommunikationssteuer-Baustein HSCX4a und HSCX4b (SAB 82525) sowie einen Mikroprozessor µP4.

Diese Zusatzeinrichtung Z bündelt die von den Anschlußeinheiten TA1, TA2, TA1′, TA2′, LA und LA′ ausgesendeten Datenübertragungsblöcke, entkoppelt die Leitungssysteme und sendet die so gebildeten Datenübertragungsblockgruppen über die Unsymmetrie-Symmetrie-Umsetzer U22 und U22′ an die Sendezweidrahtleitung S aus. Dadurch wird die Zahl möglicher Kollisionen vermindert und eine Beschleunigung des Datenaustauschs zwischen den Baugruppenträgern MMOF und EMOF erreicht. Die Zusatzeinrichtung Z löst weiter empfangene Datenübertragungsblockgruppen wieder auf.

Der Kommunikationssteuer-Baustein HSCX4 wird benötigt, weil auf beiden Seiten a, b, c und d, e, f Zugänge zu Multiplexleitungen L und V bzw. L′ und V′ vorliegen und eine funktionsmäßige Kaskadierung durch den Mikroprozessor µP4 vorgesehen ist.

Die Verbindung zwischen a und b dient der Rückführung der Sendedaten aus den Kommunikationssteuer-Bausteinen HSCX11, HSCX12, HSCX2, HSCX11′, HSGX12′ und HSCX2′ auf deren Freigabe-und Steuereingänge CTS/CxD.

## Patentansprüche

1. Controller-Bussystem für einen programmierbaren flexiblen Digitalsignal-Multiplexer mit teilnehmerseitigen Anschlußeinheiten für Bitraten einer unteren Hierarchiestufe, mit leitungsseitigen Anschlußeinheiten für Bitraten einer gegenüber der unteren höheren Hierarchiestufe, mit einer Zentraleinheit und mit einem Daten-Bussystem,
**dadurch gekennzeichnet,**
daß ein Haupt-Baugruppenträger (MMOF) mit teilnehmerseitigen Anschlußeinheiten (TA1, TA2) und/oder leitungsseitigen Anschlußeinheiten (LA), die über jeweils einen ersten bzw. zweiten Mikroprozessor (µP11, µP12, µP2) mit dem Daten-Bussystem verbunden sind, und mit einem zentralen Controller (CTR) vorgesehen ist,
daß Erweiterungs-Baugruppenträger (EMOF) mit teilnehmerseitigen Anschlußeinheiten (TA1′, TA2′) und/oder leitungsseitigen Anschlußeinheiten (LA′), die über jeweils einen ersten bzw. zweiten Mikroprozessor (µP11′, µP12′, µP2′) mit dem Daten-Bussystem verbunden sind, und mit jeweils einer Systemerweiterungs-Baugruppe (SEU) vorgesehen sind,
daß in jeder teilnehmerseitigen Anschlußeinheit (TA1, TA2, TA1′, TA2′) und in jeder leitungsseitigen Anschlußeinheit (LA, LA′) ein Kommunikationssteuer-Baustein (HSCX11, HSCX12, HSCX2, HSCX11′, HSCX12′, HSCX2′) mit einem Ausgang (TxD) und einem Eingang (RxD) für interne Daten und mit einem Steuer- und Freigabeeingang (CTS/CxD) vorgesehen ist,
daß in dem Haupt-Baugruppenträger (MMOF) und in jedem Erweiterungs-Baugruppenträger (EMOF) ein Dreileitersystem (L, L′) vorgesehen ist, dessen Sendedatenleitung (L1, L1′) mit allen zugehörigen Ausgängen (TxD) für interne Daten, dessen Steuersignalleitung (L2, L2′) mit allen zugehörigen Steuereingängen (CTS/CxD) und dessen Empfangsdatenleitung (L3, L3′) mit allen zugehörigen Eingängen (RxD) für interne Daten verbunden ist,
daß in dem Controller (CTR) ein weiterer Kommunikationssteuer-Baustein (HSCX3) mit geerdetem ("L"-Zustand) Steuer- und Freigabeeingang (CTS/CxD) vorgesehen ist, der über einen dritten Mikroprozessor (µP3) und eine Schnittstelle (I) mit einer Betriebs- und Überwachungszentrale (O&M) verbunden ist,
daß ein Vierdrahtsystem (V) mit einer symmetrischen Sende-Zweidrahtleitung (S), die über einen ersten Symmetrie/Unsymmetrie-Umsetzer (U11) mit dem Eingang (RxD) für interne Daten des weiteren Kommunikationssteuer-Bausteins (HSCX3) verbunden ist, und mit einer symmetrischen Empfangs-Zweidrahtleitung (E) vorgesehen ist, die mit dem Ausgang (TxD) für interne Daten des weiteren Kommunikationssteuer-Bausteins (HSCX3) über einen ersten Unsymmetrie/Symmetrie-Umsetzer (U21) verbunden ist, und daß in dem Controller (CTR) und den Systemerweiterungs-Baugruppen (SEU) jeweils eine Umsetzereinheit (U, U′) mit einem zweiten Unsymmetrie/Symmetrie-Umsetzer (U22, U22′) zwischen der zugehörigen Sendedatenleitung (L1, L1′) und der Sende-Zweidrahtleitung (S) über Entkopplungsdioden (D1, D1′, D2, D2′), mit einem zweiten Symmetrie/Unsymmetrie-Umsetzer (U12, U12′) zwischen der Sende-Zweidrahtleitung (S) und der zugehörigen Steuersignalleitung (L2, L2′) und mit einem dritten Symmetrie/Unsymmetrie-Umsetzer (U13, U13′) zwischen der Empfangs-Zweidrahtleitung (E) und der zugehörigen Empfangsdatenleitung (L3, L3′) vorgesehen ist.

2. Controller-Bussystem nach Anspruch 1,
**dadurch gekennzeichnet,**
daß zwischen jeder Umsetzereinheit (U, U′) und dem zugehörigen Dreileitersystem (L, L′) eine Kettenschaltung aus einem ersten Teil (HSCX4a) eines Zweifach-Kommunikationssteuer-Bausteins (HSCX4), aus einem vierten Mikroprozessor (µP4) und aus einem zweiten Teil (HSCX4b) des Zweifach-Kommunikationssteuer-Bausteins (HSCX4) vorgesehen ist und
daß zwischen der Sendedatenleitung (L1, L1′) und der Steuersignalleitung (L2, L2′) eine Kurzschlußverbindung vorgesehen ist.

## Claims

1. Controller bus system for a programmable, flexible digital signal multiplexer having subscriber-side interface units for bit rates of a lower hierarchical level, having line-side interface units for bit rates of a higher hierarchical level in comparison with the lower one, having a central unit and having a data bus system, characterized in that a main subrack (MMOF) with subscriber-side interface units (TA1, TA2) and/or line-side interface units (LA), which are connected to the data bus system via a first and second microprocessor (µP11, µP12, µP2) respectively in each case, and with a central controller (CTR) is provided, in that expansion subracks (EMOF) with subscriber-side interface units (TA1', TA2') and/or line-side interface units (LA'), which are connected to the data bus system via a first and second microprocessor (µP11', µP12,' µP2') respectively in each case, and with a system expansion module (SEU) in each case are provided, in that provided in each subscriber-side interface unit (TA1, TA2, TA1', TA2') and in each line-side interface unit (LA, LA') is a communications control module (HSCX11, HSCX12, HSCX2, HSCX11', HSCX12', HSCX2') with one output (TxD) and one input (RxD) for internal data and with one control and enable input (CTS/CxD), in that provided in the main subrack (MMOF) and in each expansion subrack (EMOF) is a three-wire system (L, L'), the transmission data line (L1, L1') of which is connected to all associated outputs (TxD) for internal data, the control signal line (L2, L2') of which is connected to all associated control inputs (CTS/CxD) and the reception data line (L3, L3') of which is connected to all associated inputs (RxD) for internal data, in that provided in the controller (CTR) is a further communications control module (HSCX3) with grounded ("L" state) control and enable input (CTS/CxD), which is connected to an operation and maintenance centre (O&M) via a third microprocessor (µP3) and an interface (I), in that a four-wire system (V) with a balanced transmission two-wire line (S), which is connected to the input (RxD) for internal data of the further communications control module (HSCX3) via a first balanced/unbalanced converter (U11), and with a balanced reception two-wire line (E) is provided, which is connected to the output (TxD) for internal data of the further communications control module (HSCX3) via a first unbalanced/balanced converter (U21), and in that provided in the controller (CTR) and the system expansion modules (SEU) in each case is a converter unit (U, U') having a second unbalanced/balanced converter (U22, U22') between the associated transmission data line (L1, L1') and the transmission two-wire line (S) via decoupling diodes (D1, D1', D2, D2'), having a second balanced/unbalanced converter (U12, U12') between the transmission two-wire line (S) and the associated control signal line (L2, L2'), and having a third balanced/unbalanced converter (U13, U13') between the reception two-wire line (E) and the associated reception data line (L3, L3').

2. Controller bus system according to Claim 1, characterized in that provided between each converter unit (U, U') and the associated three-wire system (L, L') is a chain circuit composed of a first part (HSCX4a) of a dual communications control module (HSCX4), of a fourth microprocessor (µP4) and of a second part (HSCX4b) of the dual communications control module (HSCX4), and in that a short-circuit connection is provided between the transmission data line (L1, L1') and the control signal line (L2, L2').

## Revendications

1. Dispositif de commande d'un système à bus pour un multiplexeur variable et programmable de signaux numériques, comportant des unités de raccordement côté abonné pour des débits binaires d'un étage hiérarchique inférieur, comportant des unités de raccordement côté conducteur pour des débits binaires d'un étage hiérarchique supérieur par rapport à l'étage hiérarchique inférieur, et comportant une unité centrale et un système de bus de transmission de données,
caractérisé en ce qu'il est prévu un support de module principal (MMOF) comportant des unités de raccordement côté abonné (TA1, TA2) et/ou des unités de raccordement côté conducteur (LA), qui sont reliées au système de bus de transmission de données par l'intermédiaire d'un premier ou d'un deuxième microprocesseur (µP11, µP12, µP2), et un contrôleur central (CTR),
en ce qu'il est prévu des supports de modules d'extension (EMOF) comportant des unités de raccordement côté abonné (TA1', TA2') et/ou des unités de raccordement côté conducteur (LA'), qui sont reliées au système de bus de transmission de données, par l'intermédiaire d'un premier ou d'un deuxième microprocesseur (µP11', µP12', µ2'), et comportant un module d'extension de système (SEU),
en ce qu'il est prévu, dans chaque unité de raccordement côté abonné (TA1, TA2, TA1', TA2') et dans chaque unité de raccordement côté conducteur (LA, LA') un module de commande de communication (HSCX11, HSCX12, HSCX2, HSCX11', HSCX12', HSCX2') comportant une sortie (TxD) et une entrée (RxD) pour des données internes et comportant une entrée de commande et de validation (CTS/CxD),
en ce qu'il est prévu, dans le support de module principal (MMOF) et dans chaque support de module d'extension (EMOF), un système à trois lignes (L, L'), dont la ligne de données d'émission (L1, L1') est reliée à toutes les sorties associées (TxD) pour des données internes, dont la ligne de signal de commande (L2, L2') est reliée à toutes les entrées de commande associées (CTS/CxD) et dont la ligne de données de réception (L3, L3') est reliée à toutes les entrées associées (RxD) pour des données internes,
en ce qu'il est prévu, dans le contrôleur (CTR), un autre module de commande de communication (HSCX3) comportant une entrée de commande et de validation (CTS/CxD) mise à la terre (état "L"), module qui est relié, par l'intermédiaire d'un troisième microprocesseur (µP3) et d'une interface (I), à une unité centrale de fonctionnement et de contrôle (O&M),
en ce qu'il est prévu un système à quatre fils (V) comportant une ligne symétrique bifilaire d'émission (s), qui est reliée, par l'intermédiaire d'un premier convertisseur symétrie/disymétrie (U11), à l'entrée (RxD) pour des données internes de l'autre module de commande de communication (HSCX3), et comportant une ligne symétrique bifilaire de réception (E), qui est reliée à la sortie (TxD) pour des données internes de l'autre module de commande de communication (HSCX3), par l'intermédiaire d'un premier convertisseur dissymétrie/symétrie (U21),
et en ce qu'il est prévu, dans le contrôleur (CTR) et dans les modules d'extension de système (SEU) respectivement une unité de conversion (U, U') comportant un deuxième convertisseur dissymétrie/symétrie (U22, U22') monté entre la ligne de données d'émission associée (L1 L1') et la ligne bifilaire d'émission (S), par l'intermédiaire de diodes de découplage (D1, D1', D2, D2'), comportant un deuxième convertisseur symétrie/antisymétrie (U12, U12') monté entre la ligne bifilaire d'émission (S) et la ligne de signal de commande associée (L2, L2'), et comportant un troisième convertisseur symétrie/antisymétrie (U13, U13') monté entre la ligne bifilaire de réception (E) et la ligne de données de réception associée (L3, L3').

2. Dispositif de commande d'un système à bus suivant la revendication 1,
caractérisé en ce qu'il est prévu, entre chaque unité de conversion (U, U') et le système à trois lignes associés (L, L'), un circuit itératif constitué d'une première partie (HSCX4a) d'un module de commande de communication double (HSCX4), d'un quatrième microprocesseur (µP4) et d'une deuxième partie (HSCX4b) du module de commande de communication double (HSCX4) et
en ce qu'il est prévu, entre la ligne de données d'émission (L1, L1') et la ligne de signaux de commande (L2, L2'), une liaison de court-circuit.
